# EUROPEAN PATENT SPECIFICATION

(11) **EP 2 778 528 B1**
(45) Date of publication and mention of the grant of the patent: **04.07.2018**
(21) Application number: 14157907.8
(22) Date of filing: 05.03.2014
(51) Int. Cl.: F23N 1/00

(54) **Gas flow control device for gas stove**
Gasflusskontrollvorrichtung für Gasherd
Dispositif de commande d'écoulement de gaz pour cuisinière à gaz

(30) Priority: 13.03.2013 CN 201310079153
(43) Date of publication of application: 17.09.2014
(73) Proprietor: BSH Hausgeräte GmbH, 81739 München (DE)
(72) Inventor: Kafali, Zeki, 210046 Nanjing (CN); Li, Xingzhou, 210000 Nanjing (CN); Wu, Jinhua, 210000 Nanjing (CN)

(56) References cited:
- WO-A2-2012/049049
- WO-A2-2012/080051
- JP-A- S58 219 319
- JP-A- S58 219 320
- US-A- 2 297 718
- US-A- 2 953 196

## Description

### BACKGROUND OF THE INVENTION

### Field of the Invention

The present invention relates to the field of gas stoves, and more particularly to the field of gas flow control technologies of gas stoves.

### Related Art

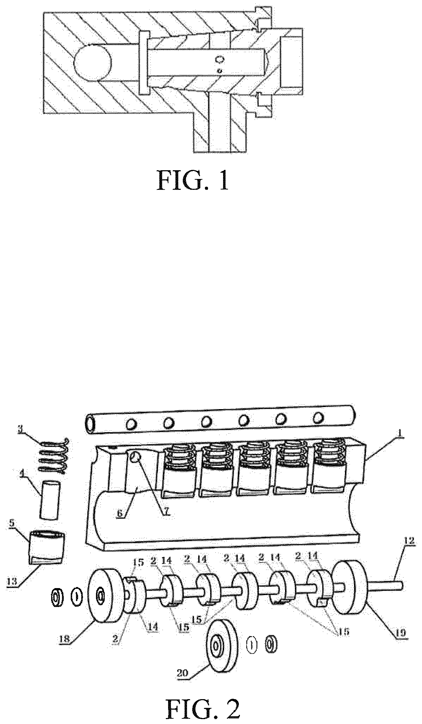

A gas stove generally uses a stopcock, and a structure of a typical stopcock is shown in FIG. 1. The volume of the stopcock is small, so that the number of holes provided on a spool is limited, which limits the number of levels. It can be said that the foregoing technical problem severely restricts the development of the gas stove.

Unless supported by sufficient evidences, the prior art described herein does not mean that it is known to those of ordinary skill in the art before the filing date of this application.

Prior art document JP S58 219320 A discloses a combustion gas feeder, which allows to switch between different kinds of gas. It employs a method wherein the mixture of gas and air is obtained through operation of a pressure switching variable mechanism, adjusted to the different kinds of gas to be used in a gas burner.

Document WO 2012/080051 A2 shows a gas valve unit for adjusting gas volume flows to a dual circuit gas burner of a gas appliance, particularly a gas cooking appliance. The gas valve unit comprises a gas inlet and two gas outlets. According to the invention, the gas volume flow fed to the first gas outlet can be adjusted in multiple stages. The gas volume flow fed to a second gas outlet can be adjusted in multiple stages. The gas valve unit comprises at least two first on-off valves and at least two first throttle points for adjusting the gas volume flow fed to the first gas outlet. The gas valve unit further comprises at least two second on-off valves and at least two second throttle points for adjusting the gas volume flow fed to the second gas outlet. At least some of the on-off valves can be switched by means of magnetic force by positioning at least one magnetically active body, and at least one first on-off valve can be switched by means of a mechanical force acting on said first on-off valve

Document WO 2012/049049 A2 describes a gas valve unit for setting a gas volumetric flow supplied to a gas burner of a gas appliance, in particular a gas cooking appliance, wherein the gas valve unit has at least two on/off valves, wherein the at least two on/off valves can be actuated mechanically by moving at least one body relative to the on/off valves.

Document JP S58 219319 A describes a combustion controller, which enables a precise multistage control of a gas flow for a gas burner for a water heater.

### SUMMARY OF THE INVENTION

The main objective of the present invention is to provide a novel gas flow control device for a gas stove and a gas stove to solve the foregoing problem.

A gas flow control device for a gas stove provided by the present invention includes a drive device, a valve body, a rotating portion, a reposition device, and a spool; the valve body includes an inner cavity, a gas inlet, and a gas outlet, and the gas inlet and the gas outlet are separately in communication with the inner cavity; the spool is disposed in the inner cavity; the drive device is used to drive the rotating portion to rotate; when the rotating portion is located in a first rotation position, the spool, under the action of the rotating portion, closes the gas outlet; and when the rotating portion is located in a second rotation position, the spool, under the action of the reposition device, opens the gas outlet; the valve body further includes a replaceable flow adjustment member; and the gas outlet is disposed on the flow adjustment member and the number of the gas outlets is at least two; and each gas outlet corresponds to a rotating portion, a reposition device, and a spool. The present invention provides a whole new gas flow control scheme for a gas stove. By adopting the technical solution, the number of levels of the gas stove can be easily increased.

Optionally, when the rotating portion is located in the first rotation position, the spool is pushed or pulled by the rotating portion to close the gas outlet; and when the rotating portion is located in the second rotation position, the spool is pushed or pulled by the reposition device to open the gas outlet.

Optionally, the reposition device includes a spring.

Optionally, the spool is provided with a mounting slot, and one end of the spring is placed in the mounting slot.

Optionally, the other end of the spring is pressed against a wall defining the inner cavity.

Optionally, the valve body is of a composite structure.

The valve body includes a replaceable flow adjustment member; and the gas outlet is disposed on the flow adjustment member. For a different gas source, the gas flow control device may use a flow adjustment member provided with a gas outlet with a different inner diameter, so that the gas flow control device can be compatible with different gas sources.

Optionally, the gas flow control device further includes a flow adjustment screw used to adjust the flow of gas flowing out from the gas outlet.

Optionally, the drive device includes a motor and a shaft, and the motor is used to drive the shaft to rotate; and the shaft is connected to the rotating portion, and the shaft is used to drive the rotating portion to rotate.

Optionally, the rotating portion includes a cam, the spool includes a pressing portion, and the pressing portion is pressed against a cam surface of the cam; the cam surface includes a first surface area and a second surface area; and when the rotating portion is located in the first rotation position, the pressing portion is pressed against the first surface area.

Optionally, when the rotating portion is located in the second rotation position, the pressing portion is pressed against the second surface area.

Optionally, a cross-section of the cam is of a circular structure having a notch; the first surface area corresponds to an arc of the circular structure; the second surface area corresponds to the notch of the circular structure; and the cam rotates about the center of the circle of the circular structure.

Optionally, the number of the cams is at least 2; each cam corresponds to a gas outlet, a reposition device, and a spool; and the shaft runs through the centers of the circles of the circular structures corresponding to the cams successively.

Optionally, the gas outlets include at least two first gas outlets and at least two second gas outlets; the first gas outlets together supply gas to an inner-ring fire cover; and the second gas outlets together supply gas to an outer-ring fire cover.

Optionally, each spool corresponds to an inner cavity; and each inner cavity corresponds to a gas inlet.

The present invention further provides a gas flow control device for a gas stove, which includes a drive device, a valve body, a rotating portion, a reposition device, and a spool; the valve body includes an inner cavity, a gas inlet, and a gas outlet, and the gas inlet and the gas outlet are separately in communication with the inner cavity; the spool is disposed in the inner cavity; the drive device is used to drive the rotating portions to rotate; when the rotating portion is located in a third rotation position, the spool, under the action of the rotating portion, opens the gas outlet; and when the rotating portion is located in a fourth rotation position, the spool, under the action of the reposition device, closes the gas outlet. The present invention provides a whole new gas flow control scheme for a gas stove. By adopting the technical solution, the number of levels of the gas stove can be easily increased.

Optionally, when the rotating portion is located in the third rotation position, the spool is pushed or pulled by the rotating portion to open the gas outlet; and when the rotating portion is located in the fourth rotation position, the spool is pushed or pulled by the reposition device to close the gas outlet.

The present invention further provides a gas stove, which is provided with the gas flow control device described above. The present invention provides a whole new gas flow control scheme for a gas stove. By adopting the technical solution, the number of levels of the gas stove can be easily increased.

The foregoing content of the present invention is not intended to describe all possible embodiments of the present invention. In the whole application, guidance is provided through examples, and the examples may be used in various feasible combinations.

### BRIEF DESCRIPTION OF THE DRAWINGS

The accompanying drawings in the following are only intended to illustrate and explain the present invention in an exemplary manner, but are not intended to limit the scope of the present invention, where:
FIG. 1 is a schematic structural view of an existing stopcock;
FIG. 2 is an exploded view of a local structure of Embodiment 1 of a gas flow control device for a gas stove according to the present invention;
FIG. 3 is a sectional view of Embodiment 1 of a gas flow control device for a gas stove according to the present invention;
FIG. 4 is another sectional view of Embodiment 1 of a gas flow control device for a gas stove according to the present invention;
FIG. 5 is another sectional view of Embodiment 1 of a gas flow control device for a gas stove according to the present invention; and
FIG. 6 is another sectional view of Embodiment 1 of a gas flow control device for a gas stove according to the present invention.

### List of reference numerals:

1 Valve body, 2 Cam, 3 Spring, 4 Spool upper portion, 5 Spool lower portion, 6 Inner cavity, 7 Gas inlet, 8 First gas outlet, 9 Second gas outlet, 10 Mounting slot, 11 Flow adjustment member, 12 Shaft, 13 Pressing portion, 14 First surface area, 15 Second surface area, 16 First gas gathering member, 17 Second gas gathering member, 18 First sealing member, 19 Second sealing member, 20 Supporting member

### DETAILED DESCRIPTION OF THE INVENTION

In order to make the objectives, solutions, and beneficial effects of the present invention more comprehensible, the present invention is further described in the following with reference to the accompanying drawings and possible embodiments. It should be noted first that, in the detailed description of the possible embodiments in the following, same or similar features have same reference numerals.

### Embodiment 1

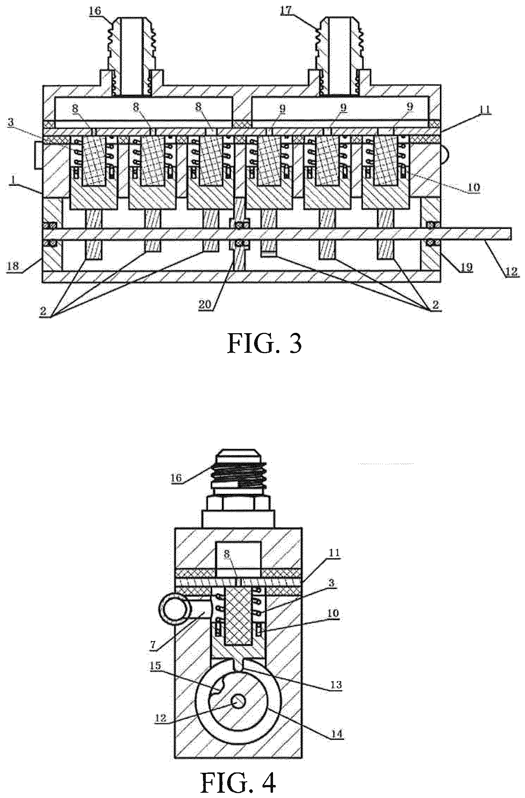

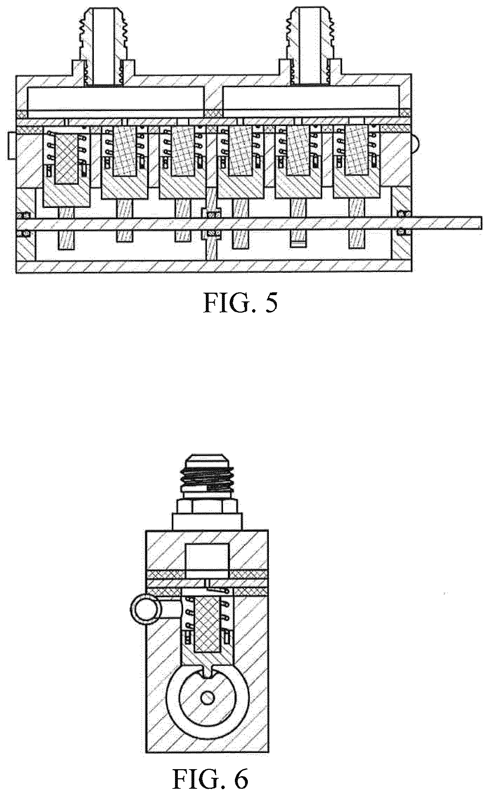

An embodiment of a gas flow control device for a gas stove provided by the present invention is shown in FIG. 2 to FIG. 6. FIG. 2 is only an exploded view of a local structure of the gas flow control device, and in order to clearly show an internal structure, the gas flow control device is cut. FIG. 3 and FIG. 5 are sectional views obtained by cutting along a length direction of the gas flow control device; FIG. 4 and FIG. 6 are sectional views obtained by cutting along a width direction of the gas flow control device.

The gas flow control device for a gas stove includes a drive device, a valve body 1, six rotating portions, six springs 3, and six spools. The six rotating portions correspond to and fit the six spools respectively, and the six springs 3 correspond to and fit the six spools respectively.

The valve body 1 includes six inner cavities 6, a replaceable flow adjustment member 11, six gas inlets 7, and six gas outlets. The six gas outlets are all disposed on the flow adjustment member 11, and the six gas outlets all run through the flow adjustment member 11 in a thickness direction of the flow adjustment member 11. The six gas inlets 7 correspond to the six inner cavities 6 respectively, and each gas inlet 7 is in communication with the inner cavity 6 corresponding to the gas inlet 7. The six gas outlets correspond to the six inner cavities 6 respectively, and each gas outlet is in communication with the inner cavity 6 corresponding to the gas outlet. A gas supply pipe is used to supply gas to the six gas inlets 7, and as shown in FIG. 2 (where the flow adjustment member 11 is not shown), the gas supply pipe is provided with six gas delivery ports corresponding to the six gas inlets 7 respectively, and each gas delivery port is used to supply gas to the gas inlet 7 corresponding to the gas delivery port. The six inner cavities 6 correspond to and fit the six spools respectively. Each spool is disposed in the inner cavity 6 corresponding to the spool.

The spool includes a spool upper portion 4 and a spool lower portion 5. The spool lower portion 5 is provided with a mounting slot 10, and one end of the spring 3 is placed in the mounting slot 10. The other end of the spring 3 is pressed against a wall defining the inner cavity 6, and in this embodiment, the other end of the spring 3 is pressed against the flow adjustment member 11.

The drive device is used to drive the rotating portions to rotate. The drive device includes a motor (not shown) and a shaft 12, the shaft 12 is of an elongated cylindrical structure, and the motor is used to drive the shaft 12 to rotate about the axis of the shaft. The six rotating portions are all cams 2. The shaft 12 runs through the six cams 2 successively along thickness directions of the six cams 2 respectively, and the shaft 12 is connected to and fixed together with the six cams 2. When the shaft 12 is driven by the motor to rotate, the shaft 12 drives the six cams 2 to rotate. Specifically, the motor is a stepper motor. The spool includes a pressing portion 13, and the pressing portion 13 is pressed against a cam surface of the cam 2. The cam surface includes a first surface area 14 and a second surface area 15. As shown in FIG. 4 and FIG. 6, a cross-section of the cam 2 is of a circular structure having a notch, the shaft 12 is located at the center of the circular structure; the first surface area 14 corresponds to an arc of the circular structure; the second surface area 15 corresponds to the notch of the circular structure. A transition surface is disposed between the first surface area 14 and the second surface area 15.

The six gas outlets include three first gas outlets 8 and three second gas outlets 9. The three first gas outlets 8 together supply gas to an inner-ring fire cover. The three second gas outlets 9 together supply gas to an outer-ring fire cover. As shown in FIG. 3 and FIG. 5, the three first gas outlets 8 are the first to third gas outlets counted from the left in the drawings, and the three second gas outlets 9 are the fourth to sixth gas outlets counted from the left in the drawings. The gas can flow into the inner cavities 6 only through the gas inlets 7, and the gas that flows into the inner cavities 6 can flow out only through the first gas outlets 8 and/or the second gas outlets 9.

Each cam 2 correspondingly has a "first rotation position". For each cam 2 located in the first rotation position thereof, the spool corresponding to the cam 2 is pushed by the cam 2 to close the corresponding gas outlet; at the moment, the spring 3 corresponding to the cam 2 is in a compressed state. It should be noted here that, although each cam 2 correspondingly has the "first rotation position", it does not mean that "first rotation positions" corresponding to any two cams 2 are necessarily the same, and in fact, the first rotation positions may be the same, or different, or partially the same. Further, the "first rotation position" may be a position point, and may also be a rotation amplitude formed by a series of successively connected position points. As shown in FIG. 4, the cam 2 in the drawing is located in the first rotation position, and the pressing portion 13 of the corresponding spool is pressed against the first surface area 14 of the cam 2. Further, each cam 2 in FIG. 3 is located in the first rotation position thereof, and no gas flows to the inner-ring fire cover or the outer-ring fire cover. The second to sixth cams 2 counted from the left in FIG. 5 are each located in the first rotation positions thereof.

Each cam 2 correspondingly has a "second rotation position". For each cam 2 located in the second rotation position, the spool corresponding to the cam 2 is pushed by the spring 3 to open the gas outlet; at the moment, the spring 3 corresponding to the cam 2 is still in the compressed state. It should be noted here that, although each cam 2 correspondingly has the "second rotation position", it does not mean that "second rotation positions" corresponding to any two cams 2 are necessarily the same, and in fact, the second rotation positions may be the same, or different, or partially the same. Further, the "second rotation position" may be a position point, and may also be a rotation amplitude formed by a series of successively connected position points. As shown in FIG. 6, the cam 2 in the drawing is located in the second rotation position, and the pressing portion 13 of the corresponding spool is pressed against the second surface area 15 of the cam 2. The first cam 2 counted from the left in FIG. 5 is located in the second rotation position thereof; at the moment, the gas stove is at a minimum power level, only a small amount of gas flows to the inner-ring fire cover, and no gas flows to the outer-ring fire cover.

The gas flow control device for a gas stove further includes a first gas gathering member 16, a second gas gathering member 17, and a gas gathering upper cover, as shown in FIG. 3 and FIG. 5. The first gas gathering member 16 and the second gas gathering member 17 are both mounted and fixed on the gas gathering upper cover. The gas gathering upper cover is provided with a first gas gathering cavity and a second gas gathering cavity. The first gas gathering cavity is used to gather the gas that flows out from the first gas outlets 8, and further deliver the gas to the first gas gathering member 16. The first gas gathering member 16 further supplies the gas to the inner-ring fire cover. The second gas gathering cavity is used to gather the gas that flows out from the second gas outlets 9, and further deliver the gas to the second gas gathering member 17. The second gas gathering member 17 further supplies the gas to the outer-ring fire cover.

The valve body 1 is further provided with a cavity used to place the six cams 2. A left side of the cavity is provided with a first sealing member 18, and a right side of the cavity is provided with a second sealing member 19. The shaft 12 runs through the second sealing member 19, and is placed in the first sealing member 18. The first sealing member 18 and the second sealing member 19 are each provided with a sealing ring, and the two sealing rings are both disposed to surround the shaft 12.

The gas flow control device for a gas stove is further provided with a supporting member 20 used to support the shaft 12, as shown in FIG. 2 and FIG. 3. The shaft 12 runs through the supporting member 20 (the shaft 12 in FIG. 3 does not run through the supporting member 20 yet). The supporting member 20 is also provided with a sealing ring, and the sealing ring is disposed to surround the shaft 12.

The foregoing is only a possible embodiment of the present invention, and other embodiments may be obtained by modifying, replacing, or adding some technical features. For example, although this embodiment adopts the structure in which the inner cavities are disposed to be independent of each other, and each inner cavity is correspondingly provided with a gas inlet, in fact, it is feasible to adopt the structure in which the inner cavities are in communication with each other, and in this way, only one gas inlet needs to be disposed to supply the gas to the inner cavities. For another example, it may be that: the first gas outlet is used to supply the gas to the outer-ring fire cover, and the second gas outlet is used to supply the gas to the inner-ring fire cover. For another example, the "replaceable flow adjustment member" may be replaced by a flow adjustment screw, and the flow of the gas flowing out from the gas outlet is adjusted through the flow adjustment screw. For another example, it may be that: when any rotating portion is located in the second rotation position, the corresponding spool is pulled by the spring to open the gas outlet. For another example, it is feasible to save the supporting member. For another example, when any cam is located in the second rotation position, the pressing portion of the spool corresponding to the cam may also be pressed against another component (definitely, the structure of the pressing portion is not limited to the structure shown in this embodiment), and does not have to be pressed against the second surface area as long as the technical effect of opening the gas outlet can be achieved. For another example, the number of the first gas outlets may be one, two, four, five, six, or larger. The number of the second gas outlets may be one, two, four, five, six, or larger.

### Embodiment 2

The present invention further provides another embodiment of the gas flow control device for a gas stove, which is obtained through further improvement based on Embodiment 1, and a main difference between this embodiment and Embodiment 1 lies in that: when the rotating portion of this embodiment is located in a third rotation position, the spool is pulled by the rotating portion to open the gas outlet; when the rotating portion of this embodiment is located in a fourth rotation position, the spool, under the action of a reposition device, closes the gas outlet. For brevity, structural features of this embodiment, which are the same as or similar to those of Embodiment 1, are not described herein in detail again, and reference may be made to the corresponding descriptions and accompanying drawings of Embodiment 1.

Specifically, for that "when the rotating portion of this embodiment is located in a third rotation position, the spool is pulled by the rotating portion to open the gas outlet", a specific implementation manner may be a technical means easily figured out by any person skilled in the art. For example, a traction rope may be disposed, one end of the traction rope is connected to the shaft, the other end of the traction rope is connected to the spool; when the shaft rotates, the traction rope is wound on the shaft, and when the winding reaches a certain degree, the traction rope pulls the spool away from the gas outlet to open the gas outlet, and the gas in the inner cavity flows out through the gas outlet.

At the moment, if the shaft rotates reversely, the traction rope wound on the shaft is released, a pulling force applied by the traction rope to the spool disappears, the rotating portion is located in the fourth rotation position, and the spool, under the action of the reposition device, closes the gas outlet.

Specifically, for that "the spool, under the action of the reposition device, closes the gas outlet", a specific implementation manner may be a technical means easily figured out by any person skilled in the art. For example, through pushing or pulling of the spring, the spool may be pressed on the gas outlet, so as to close the gas outlet.

### Embodiment 3

The present invention further provides an embodiment of an electronically controlled gas stove, which is provided with the gas flow control device according to Embodiment 1 or 2. For brevity, structural features of the gas flow control device are not described herein in detail again, and reference may be made to the corresponding descriptions and accompanying drawings of Embodiment 1 and Embodiment 2.

It should be additionally noted that, the present invention should not be construed as being limited to only the foregoing implementation manners, but should be construed as covering all possible implementations defined by the claims in combination with the content disclosed by the specification. Therefore, any simple amendment, equivalent change, and modification made to the embodiments based on the technical essence of the present invention without departing from the content of the technical solutions of the present invention shall fall within the protection scope of the technical solutions of the present invention. It should be particularly pointed out that any degraded application based on the present invention still falls within the protection scope of the technical solutions of the present invention.

## Claims

1. A gas flow control device for a gas stove, the gas flow control device comprising:
a drive device, a valve body (1), a rotating portion, a reposition device, and a spool;
wherein
the valve body (1) comprises an inner cavity (6), a gas inlet (7), and a gas outlet (8, 9) and the gas inlet (7) and the gas outlet (8, 9) are separately in communication with the inner cavity (6);
the spool is disposed in the inner cavity (6);
the drive device is used to drive the rotating portion to rotate;
when the rotating portion is located in a first rotation position, the spool, under the action of the rotating portion, closes the gas outlet (8, 9); when the rotating portion is located in a second rotation position, the spool, under the action of the reposition device, opens the gas outlet (8, 9); the number of the gas outlets (8, 9) is at least two; and each gas outlet (8, 9) corresponds to a rotating portion, a reposition device, and a spool,
**characterized in that** :
the valve body (1) further comprises a replaceable flow adjustment member (11); and the at least two gas outlets (8, 9) are disposed on the flow adjustment member (11) and the gas outlets (8, 9) all run through the flow adjustment member (11) in a thickness direction of the flow adjustment member (11).

2. The gas flow control device according to claim 1, **characterized in that**: when the rotating portion is located in the first rotation position, the spool is pushed or pulled by the rotating portion to close the gas outlet; and
when the rotating portion is located in the second rotation position, the spool is pushed or pulled by the reposition device to open the gas outlet.

3. The gas flow control device according to claim 1 or 2, **characterized in that**: the reposition device comprises a spring (3).

4. The gas flow control device according to claim 3, **characterized in that**: the spool is provided with a mounting slot (10), and one end of the spring (3) is placed in the mounting slot (10).

5. The gas flow control device according to claim 4, **characterized in that**: the other end of the spring (3) is pressed against a wall defining the inner cavity (6).

6. The gas flow control device according to any of claims 1 to 5, **characterized in that**:
the valve body (1) is of a composite structure.

7. The gas flow control device according to any of claims 1 to 6, **characterized by** further comprising:
a flow adjustment screw, used to adjust the flow of gas flowing out from the gas outlet.

8. The gas flow control device according to any of claims 1 to 7, **characterized in that**:
the drive device comprises a motor and a shaft (12), and the motor is used to drive the shaft (12) to rotate; and
the shaft (12) is connected to the rotating portion, and the shaft (12) is used to drive the rotating portion to rotate.

9. The gas flow control device according to any of claims 1 to 8, **characterized in that**:
the rotating portion comprises a cam (2), the spool comprises a pressing portion (13), and the pressing portion (13) is pressed against a cam surface of the cam (2);
the cam surface comprises a first surface area (14) and a second surface area (15); and
when the rotating portion is located in the first rotation position, the pressing portion (13) is pressed against the first surface area (14).

10. The gas flow control device according to claim 9, **characterized in that**:
when the rotating portion is located in the second rotation position, the pressing portion (13) is pressed against the second surface area (15).

11. The gas flow control device according to claim 10, **characterized in that**:
a cross-section of the cam (2) is of a circular structure having a notch;
the first surface area (14) corresponds to an arc of the circular structure;
the second surface area (15) corresponds to the notch of the circular structure; and
the cam (2) rotates about the center of the circle of the circular structure.

12. The gas flow control device according to claim 11, **characterized in that**:
the shaft (12) runs through the centers of the circles of the circular structures corresponding to the cams (2) successively.

13. The gas flow control device according to any of claims 1 - 12, **characterized in that**:
the gas outlets (8, 9) comprise at least two first gas outlets (8) and at least two second gas outlets (9);the first gas outlets (8) together for supplying gas to an inner-ring fire cover; and
the second gas outlets (9) together for supplying gas to an outer-ring fire cover.

## Patentansprüche

1. Gasdurchflussregelvorrichtung für einen Gaskocher, die Folgendes umfasst:
eine Antriebsvorrichtung, einen Ventilkörper (1), einen rotierenden Abschnitt, eine Rückführvorrichtung und eine Rolle,
wobei
der Ventilkörper (1) einen Innenhohlraum (6), einen Gaseinlass (7) und einen Gasauslass (8, 9) umfasst und der Gaseinlass (7) und der Gasauslass (8, 9) getrennt mit dem Innenhohlraum (6) verbunden sind,
die Rolle in dem Innenhohlraum (6) angeordnet ist,
die Antriebsvorrichtung zum Antreiben zwecks Drehens des rotierenden Abschnitts benutzt wird,
die Rolle, wenn sich der rotierende Abschnitt in einer ersten Drehposition befindet, unter Einwirkung des rotierenden Abschnitts den Gasauslass (8, 9) schließt,
die Rolle, wenn sich der rotierende Abschnitt in einer zweiten Drehposition befindet, unter Einwirkung der Rückführvorrichtung den Gasauslass (8, 9) öffnet,
die Anzahl der Gasauslässe (8, 9) mindestens zwei beträgt und jeder Gasauslass (8, 9) einem rotierenden Abschnitt, einer Rückführvorrichtung und einer Rolle entspricht,
**dadurch gekennzeichnet, dass**:
der Ventilkörper (1) ferner ein austauschbares Durchflusseinstellelement (11) umfasst und die mindestens zwei Gasauslässe (8, 9) an dem Durchflusseinstellelement (11) angeordnet sind und alle Gasauslässe (8, 9) in Dickenrichtung des Durchflusseinstellelements (11) durch das Durchflusseinstellelement (11) hindurch verlaufen.

2. Gasdurchflussregelvorrichtung nach Anspruch 1, **dadurch gekennzeichnet, dass**:
die Rolle, wenn sich der rotierende Abschnitt in der ersten Drehposition befindet, von dem rotierenden Abschnitt so geschoben oder gezogen wird, dass der Gasauslass geschlossen wird, und
die Rolle, wenn sich der rotierende Abschnitt in der zweiten Drehposition befindet, von der Rückführvorrichtung so geschoben oder gezogen wird, dass der Gasauslass geöffnet wird.

3. Gasdurchflussregelvorrichtung nach Anspruch 1 oder 2, **dadurch gekennzeichnet, dass**:
die Rückführvorrichtung eine Feder (3) umfasst.

4. Gasdurchflussregelvorrichtung nach Anspruch 3, **dadurch gekennzeichnet, dass**:
die Rolle mit einem Montageschlitz (10) versehen und ein Ende der Feder (3) in dem Montageschlitz (10) angeordnet ist.

5. Gasdurchflussregelvorrichtung nach Anspruch 4, **dadurch gekennzeichnet, dass**:
das andere Ende der Feder (3) gegen eine Wand gedrückt wird, die den Innenhohlraum (6) definiert.

6. Gasdurchflussregelvorrichtung nach einem der Ansprüche 1 bis 5, **dadurch gekennzeichnet, dass**:
es sich bei dem Ventilkörper (1) um eine Verbundkonstruktion handelt.

7. Gasdurchflussregelvorrichtung nach einem der Ansprüche 1 bis 6, **dadurch gekennzeichnet, dass** sie ferner Folgendes umfasst:
eine Durchflusseinstellschraube, die zum Einstellen des Durchflusses von aus dem Gasauslass ausströmendem Gas verwendet wird.

8. Gasdurchflussregelvorrichtung nach einem der Ansprüche 1 bis 7, **dadurch gekennzeichnet, dass**:
die Antriebsvorrichtung einen Motor und eine Welle (12) umfasst und der Motor zum Antreiben zwecks Drehens der Welle (12) verwendet wird und
die Welle (12) mit dem rotierenden Abschnitt verbunden ist und die Welle (12) zum Antreiben zwecks Drehens des rotierenden Abschnitts verwendet wird.

9. Gasdurchflussregelvorrichtung nach einem der Ansprüche 1 bis 8, **dadurch gekennzeichnet, dass**:
der rotierende Abschnitt eine Kurvenscheibe (2) umfasst, die Rolle einen Andrückabschnitt (13) umfasst und der Andrückabschnitt (13) gegen eine Kurvenscheibenfläche der Kurvenscheibe (2) gedrückt wird,
die Kurvenscheibenfläche einen ersten Oberflächenbereich (14) und einen zweiten Oberflächenbereich (15) umfasst und
der Andrückabschnitt (13), wenn sich der rotierende Abschnitt in der ersten Drehposition befindet, gegen den ersten Oberflächenbereich (14) gedrückt wird.

10. Gasdurchflussregelvorrichtung nach Anspruch 9, **dadurch gekennzeichnet, dass**:
der Andrückabschnitt (13), wenn sich der rotierende Abschnitt in der zweiten Drehposition befindet, gegen den zweiten Oberflächenbereich (15) gedrückt wird.

11. Gasdurchflussregelvorrichtung nach Anspruch 10, **dadurch gekennzeichnet, dass**:
ein Querschnitt der Kurvenscheibe (2) eine kreisförmige Konstruktion mit einer Kerbe aufweist,
der erste Oberflächenbereich (14) einem Kreisbogen der kreisförmigen Konstruktion entspricht,
der zweite Oberflächenbereich (15) der Kerbe der kreisförmigen Konstruktion entspricht und
sich die Kurvenscheibe (2) um den Mittelpunkt des Kreises der kreisförmigen Konstruktion dreht.

12. Gasdurchflussregelvorrichtung nach Anspruch 11, **dadurch gekennzeichnet, dass**:
die Welle (12) nacheinander durch den Mittelpunkt der Kreise der kreisförmigen Konstruktionen verläuft, die den Kurvenscheiben (2) entsprechen.

13. Gasdurchflussregelvorrichtung nach einem der Ansprüche 1 bis 12, **dadurch gekennzeichnet, dass**:
die Gasauslässe (8, 9) mindestens zwei erste Gasauslässe (8) und mindestens zwei zweite Gasauslässe (9) umfassen, wobei die ersten Gasauslässe (8) gemeinsam eine Innenring-Flammenabdeckung und die zweiten Gasauslässe (9) gemeinsam eine Außenring-Flammenabdeckung mit Gas versorgen.

## Revendications

1. Dispositif de commande d'écoulement de gaz pour une cuisinière à gaz, le dispositif de commande d'écoulement de gaz comprenant :
un dispositif d'entraînement, un corps de soupape (1), une partie tournante, un dispositif de repositionnement et une bobine ; dans lequel :
le corps de soupape (1) comprend une cavité interne (6), une entrée de gaz (7) et une sortie de gaz (8, 9), et l'entrée de gaz (7) et la sortie de gaz (8, 9) sont en communication avec la cavité interne (6) de façon séparée ;
la bobine est disposée dans la cavité interne (6) ;
le dispositif d'entraînement est utilisé pour entraîner en rotation la partie tournante ;
lorsque la partie tournante est placée dans une première position de rotation, la bobine, sous l'action de la partie tournante, ferme la sortie de gaz (8, 9) ;
lorsque la partie tournante est placée dans une seconde position de rotation, la bobine, sous l'action du dispositif de repositionnement, ouvre la sortie de gaz (8, 9) ;
le nombre des sorties de gaz (8, 9) est d'au moins deux ; et chaque sortie de gaz (8, 9) correspond à une partie tournante, à un dispositif de repositionnement et à une bobine ;
**caractérisé en ce que** :
le corps de soupape (1) comprend en outre un élément de réglage d'écoulement repositionnable (11) ; et les au moins deux sorties de gaz (8, 9) sont disposées sur l'élément de réglage d'écoulement (11), et les sorties de gaz (8, 9) cheminent toutes au travers de l'élément de réglage d'écoulement (11) dans une direction d'épaisseur de l'élément de réglage d'écoulement (11).

2. Dispositif de commande d'écoulement de gaz selon la revendication 1, **caractérisé en ce que** :
lorsque la partie tournante est placée dans la première position de rotation, la bobine est poussée ou tirée par la partie tournante de manière à ce qu'elle ferme la sortie de gaz ; et
lorsque la partie tournante est placée dans la seconde position de rotation, la bobine est poussée ou tirée par le dispositif de repositionnement de manière à ce qu'elle ouvre la sortie de gaz.

3. Dispositif de commande d'écoulement de gaz selon la revendication 1 ou 2, **caractérisé en ce que** le dispositif de repositionnement comprend un ressort (3).

4. Dispositif de commande d'écoulement de gaz selon la revendication 3, **caractérisé en ce que** la bobine est munie d'une fente de montage (10), et une extrémité du ressort (3) est placée dans la fente de montage (10).

5. Dispositif de commande d'écoulement de gaz selon la revendication 4, **caractérisé en ce que** l'autre extrémité du ressort (3) est pressée contre une paroi qui définit la cavité interne (6).

6. Dispositif de commande d'écoulement de gaz selon l'une quelconque des revendications 1 à 5, **caractérisé en ce que** le corps de soupape (1) est d'une structure composite.

7. Dispositif de commande d'écoulement de gaz selon l'une quelconque des revendications 1 à 6, **caractérisé en ce qu'**il comprend en outre :
une vis de réglage d'écoulement, qui est utilisée pour régler l'écoulement de gaz qui s'écoule en sortie depuis la sortie de gaz.

8. Dispositif de commande d'écoulement de gaz selon l'une quelconque des revendications 1 à 7, **caractérisé en ce que** :
le dispositif d'entraînement comprend un moteur et un arbre (12), et le moteur est utilisé pour entraîner en rotation l'arbre (12) ; et
l'arbre (12) est connecté à la partie tournante, et l'arbre (12) est utilisé pour entraîner en rotation la partie tournante.

9. Dispositif de commande d'écoulement de gaz selon l'une quelconque des revendications 1 à 8, **caractérisé en ce que** :
la partie tournante comprend une came (2), la bobine comprend une partie de pression (13), et la partie de pression (13) est pressée contre une surface de came de la came (2) ;
la surface de came comprend une première zone surfacique (14) et une seconde zone surfacique (15) ; et
lorsque la partie tournante est placée dans la première position de rotation, la partie de pression (13) est pressée contre la première zone surfacique (14).

10. Dispositif de commande d'écoulement de gaz selon la revendication 9, **caractérisé en ce que** :
lorsque la partie tournante est placée dans la seconde position de rotation, la partie de pression (13) est pressée contre la seconde zone surfacique (15).

11. Dispositif de commande d'écoulement de gaz selon la revendication 10, **caractérisé en ce que** :
une section en coupe transversale de la came (2) est d'une structure circulaire comportant une encoche ;
la première zone surfacique (14) correspond à un arc de la structure circulaire ;
la seconde zone surfacique (15) correspond à l'encoche de la structure circulaire ; et
la came (2) tourne autour du centre du cercle de la structure circulaire.

12. Dispositif de commande d'écoulement de gaz selon la revendication 11, **caractérisé en ce que** :
l'arbre (12) passe par les centres des cercles des structures circulaires qui correspondent aux cames (2) de façon successive.

13. Dispositif de commande d'écoulement de gaz selon l'une quelconque des revendications 1 à 12, **caractérisé en ce que** :
les sorties de gaz (8, 9) comprennent au moins deux premières sorties de gaz (8) et au moins deux secondes sorties de gaz (9) ;
les premières sorties de gaz (8) ont pour fonction, en association, d'alimenter le gaz sur un chapeau de brûleur avec bague interne ; et
les secondes sorties de gaz (9) ont pour fonction, en association, d'alimenter le gaz sur un chapeau de brûleur avec bague externe.
